# DEMANDE DE BREVET EUROPEEN

(11) **EP 4 447 294 A1**
(43) Date de publication de la demande: **16.10.2024**
(21) Numéro de dépôt: 24164290.9
(22) Date de dépôt: 18.03.2024
(51) Int. Cl.: H02K 11/40, H01R 39/24, H01R 4/64, H01R 13/648

(54) **DISPOSITIF DE MISE À LA TERRE D'UNE MACHINE TOURNANTE ÉLECTRIQUE**

(30) Priorité: 22.03.2023 FR 2302687
(71) Demandeur: Société Nivolaisienne d'Electrotechnique (SNE), 38300 Nivolas-Vermelle (FR)
(72) Inventeur: HOLLARD, Mathieu, 38300 NIVOLAS-VERMELLE (FR)
(74) Mandataire: Bouvier, Thibault

(57) **Abrégé**

L'invention concerne un dispositif (1000) de mise à la terre configuré pour être monté sur le capot de ventilation (330) d'une machine tournante électrique (300), comprenant :
- un corps principal (100) supportant un ensemble de fibres conductrices (110) pour la mise à la terre des courants de fuite, et une cosse (120) de mise à la terre.

Il est essentiellement caractérisé en ce qu'il comprend en outre :
• des moyens de blocage ; et
• un corps secondaire (200) muni
∘ d'un moyeu (210) qui épouse la forme du corps principal (100), et
∘ d'une platine de fixation (230) ;

Et en ce que
• le corps principal (100) est mobile en translation ;
• la platine de fixation (230) est configurée pour fixer le corps secondaire (200) sur le capot de ventilation (330) ;
• les moyens de blocage bloquent la translation du corps principal (100) par rapport au corps secondaire (200).

## Description

La présente invention concerne le domaine de la gestion des courants de palier dans les machines tournantes électriques.

Plus précisément, la présente invention concerne un dispositif de contact électriquement conducteur permettant la mise à la terre d'un arbre tournant à l'aide de fibres conductrices notamment pour une machine tournante électrique, par exemple un moteur électrique ou une génératrice en fonctionnement.

Les courants de palier dans les machines tournantes électriques sont bien connus, et leurs effets délétères sur ceux-ci également.

Les courants de palier ont toujours existé dans les moteurs électriques et sont à l'origine d'un grand nombre d'avaries, dont la détérioration graduelle des pistes de roulement du moteur.

En effet, les chaînes de motorisation asynchrone de forte puissance sont entrées dans une phase de maturité depuis plusieurs années. Néanmoins des problèmes subsistent, liés à l'alimentation de ces moteurs par des convertisseurs statiques dont les commutations sont de plus en plus rapides. Les fronts de tension engendrés par les commutations de l'électronique de puissance sont à l'origine du développement de courants parasites se propageant dans toute la machine tournante électrique. Leur circulation est liée à des phénomènes complexes tant d'un point de vue électrostatique que magnétique et ce dans le domaine des hautes fréquences. Les ordres de grandeurs actuels conduisent couramment à des phénomènes dans la gamme de fréquence du MHz. Une partie de ces courants traversent les paliers de la machine tournante électrique et, suivant leurs amplitudes, sont susceptibles d'occasionner des dégradations à plus ou moins long terme.

Lorsque des tensions d'arbre du moteur dépassent la capacité d'isolement de la graisse à roulement, des courants dirigés vers le roulement extérieur peuvent se présenter et entraîner l'apparition de piqûres et de rainures sur les bagues de roulement. Ces courants sont dus à l'accumulation d'énergie électrostatique au rotor de la machine qui se décharge brutalement lorsque le champ électrique est suffisant pour "claquer" la graisse isolante des roulements. Ce problème se traduit d'abord par l'apparition d'un bruit accompagné d'une surchauffe, due au fait que les roulements commencent à perdre leur forme d'origine et que des fragments de métal se mélangent à la graisse et aggravent la friction. Ceci risque de provoquer la destruction du roulement en à peine quelques mois.

Pour prévenir cette dégradation, il est connu qu'il convient d'établir la mise à la terre du moteur, c'est-à-dire de sa carcasse et de son arbre, par exemple selon la solution décrite dans la demande WO9701200 qui prévoit une pointe en carbone maintenue en contact avec la carcasse du moteur grâce à un ressort.

De telles solutions présentent l'inconvénient d'être limitées par une vitesse de rotation maximale du moteur, par un échauffement du au contact, une friction plus importante, un effort mécanique plus important, et l'inconvénient de faire du bruit à l'usage.

La solution développée par la demanderesse dans la demande FR3119053 permet de résoudre ces inconvénients.

La présente invention vise à améliorer encore l'état de l'art en permettant une mise en oeuvre particulièrement astucieuse d'un dispositif de mise à la terre.

Dans ce contexte, la présente invention concerne selon un premier de ses objets, un dispositif (1000) de mise à la terre d'une machine tournante électrique (300), la machine tournante électrique (300)comprenant un arbre tournant (310), un rotor (320) et un capot de ventilation (330),
ledit dispositif de mise à la terre étant configuré pour être monté sur le capot de ventilation (330) de manière amovible, et comprenant :
- un corps principal (100) conducteur d'électricité, présentant une forme allongée, et supportant à une de ses extrémités un ensemble de fibres conductrices (110) agencées pour permettre la mise à la terre des courants de fuite induits relatifs au rotor (320) dans la machine tournante électrique (300), et une cosse (120) de mise à la terre à l'autre de ses extrémités.

Il est essentiellement caractérisé en ce qu'il comprend en outre :
- des moyens de blocage ; et
- un corps secondaire (200), comprenant :
   o un moyeu (210) dont la forme épouse localement celle du corps principal (100), et
   o une platine de fixation (230), solidaire du moyeu (210) ;
Et en ce que
- le corps principal (100) est mobile en translation par rapport au corps secondaire (200) ;
- la platine de fixation (230) est configurée pour fixer le corps secondaire (200) sur le capot de ventilation (330) ;
- les moyens de blocage sont configurés pour bloquer le mouvement de translation du corps principal (100) par rapport au corps secondaire (200) et assurer une solidarisation temporaire du corps principal (100) et du corps secondaire (200), permettant d'ajuster la position de l'extrémité des fibres conductrices (110) par rapport à la machine tournante électrique (300), donc de permettre la mise à la terre des courants de fuite.

On peut prévoir que les moyens de blocage comprennent :
- un trou traversant (220) taraudé radialement dans le moyeu (210) du corps secondaire (200), et
- une vis, insérable dans le trou taraudé (220), et configurée pour venir en butée contre le corps principal (100) lorsque le corps principal (100) est inséré dans le moyeu (210) du corps secondaire (200), de sorte à bloquer la translation du corps principal (100) dans le moyeu (210) du corps secondaire (200).

On peut prévoir que les moyens de blocage comprennent :
- un ensemble d'au moins un trou traversant (130) radial dans le corps principal (100) ;
- un ensemble d'au moins un trou traversant (250) solidaire du corps secondaire (200) ; et
- une goupille, configurée pour pouvoir être insérée de manière amovible dans ledit ensemble d'au moins un trou traversant radial du corps principal (100) et le trou traversant solidaire du corps secondaire (200).

On peut prévoir que les moyens de blocage comprennent un raccord à serrage rapide, comprenant :
- un filetage (261) sur la partie externe du corps secondaire (200), faisant office de corps mâle ;
- un écrou (260), faisant office de corps femelle, dont le taraudage correspond au filetage (261) du corps secondaire (200) ; et
- un joint entre le filetage du corps secondaire (200) et l'écrou solidaire du corps principal (100).

En particulier, le joint peut se présenter sous forme d'une griffe, d'une olive ou d'une bague.

On peut prévoir que les moyens de blocage sont réversibles, de sorte à permettre la désolidarisation du corps principal (100) et du corps secondaire (200).

On peut prévoir que le corps principal (100) présente une section à symétrie radiale.

On peut prévoir que :
- le corps principal (100) présente une section ronde et une face externe présentant un filetage (140) ;
- le moyeu (210) du corps secondaire (200) présente un taraudage (240), complémentaire du filetage (140) du corps principal (100), tel que le vissage du corps principal (100) dans le moyeu (210) du corps secondaire (200) permet d'effectuer un mouvement de translation

On peut prévoir que l'ensemble de fibres conductrices (110) du corps principal (100) comprend une pluralité de faisceaux (111) de fibres conductrices (110), la longueur des fibres au sein d'un faisceau (111) ou la longueur des fibres entre deux faisceaux (111) pouvant être différente.

Selon un autre de ses objets, l'invention concerne un capot de ventilation (330) de machine tournante électrique (300) comprenant un dispositif de mise à la terre selon l'invention, dans lequel le dispositif de mise à la terre est fixé sur le capot de ventilation (330) par sa platine de fixation (230).

Selon un autre de ses objets, l'invention concerne une machine tournante électrique (300) comprenant un arbre tournant (310), un rotor (320), un capot de ventilation (330) et un dispositif de mise à la terre selon l'invention.

Enfin, l'invention concerne également un kit comprenant un dispositif de mise à la terre selon l'invention, et un ensemble d'au moins un autre corps principal (100).

D'autres caractéristiques et avantages de la présente invention apparaîtront plus clairement à la lecture de la description suivante donnée à titre d'exemple illustratif et non limitatif et faite en référence aux figures annexées.

### *Figures*

[Fig. 1] illustre un mode de réalisation d'un dispositif de mise à la terre selon l'invention en vue de trois quarts ;
[Fig. 2] illustre le dispositif de mise à la terre de la figure 1 selon une autre vue de trois quarts ;
[Fig. 3] illustre un mode de réalisation d'un corps principal et d'un corps secondaire d'un dispositif de mise à la terre selon l'invention avant l'insertion du corps principal dans le corps secondaire ;
[Fig. 4] illustre en coupe transversale, un mode de réalisation d'un corps principal comprenant un premier mode de réalisation de faisceaux de fibres conductrices ;
[Fig. 5] illustre en coupe transversale, un mode de réalisation d'un corps principal comprenant un autre mode de réalisation de faisceaux de fibres conductrices ;
[Fig. 6] illustre un mode de réalisation d'un corps principal et d'un corps secondaire d'un dispositif de mise à la terre selon l'invention, pour une solidarisation par goupille ;
[Fig. 7] illustre un mode de réalisation d'un corps principal et d'un corps secondaire d'un dispositif de mise à la terre selon l'invention, pour une solidarisation par vissage ;
[Fig. 8] illustre en vue partiellement éclatée une machine tournante électrique prêt à être équipé d'un dispositif de mise à la terre selon l'invention ;
[Fig. 9] illustre la machine tournante électrique de la figure 8 dans lequel le dispositif de mise à la terre selon l'invention est au contact de l'arbre tournant ;
[Fig. 10] illustre la machine tournante électrique de la figure 9, en vue grossie et de trois quart;
[Fig. 11] illustre un mode de réalisation de moyens de blocage selon l'invention comprenant un raccord à serrage rapide.

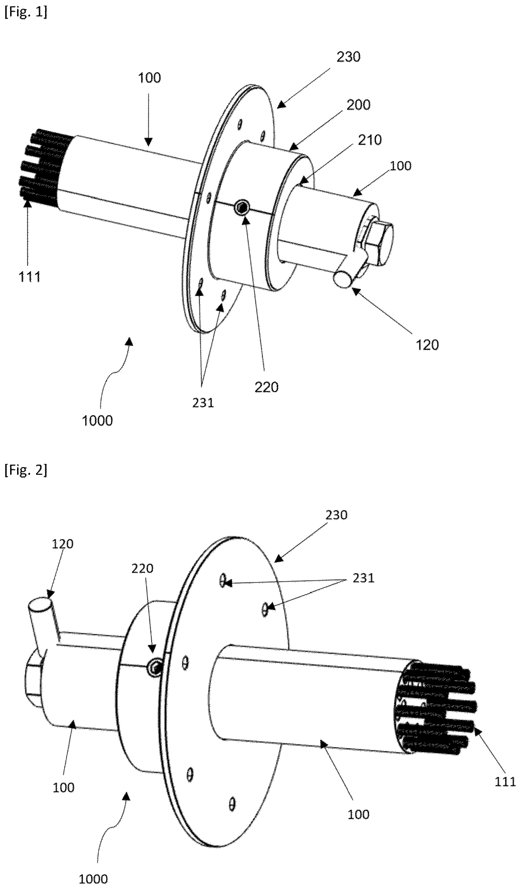

La figure 1 illustre un mode de réalisation d'un dispositif de mise à la terre selon l'invention en vue de trois quarts. Le dispositif de mise à la terre comprend un corps principal 100 conducteur d'électricité qui présente une forme allongée.

A une de ses extrémités il supporte un ensemble de fibres conductrices 110 agencées en l'espèce en une pluralité de faisceaux 111, pour permettre la conduction des courants de fuite.

A l'autre de ses extrémités, il supporte une cosse 120 de mise à la terre, pour permettre la mise à la terre des courants de fuite.

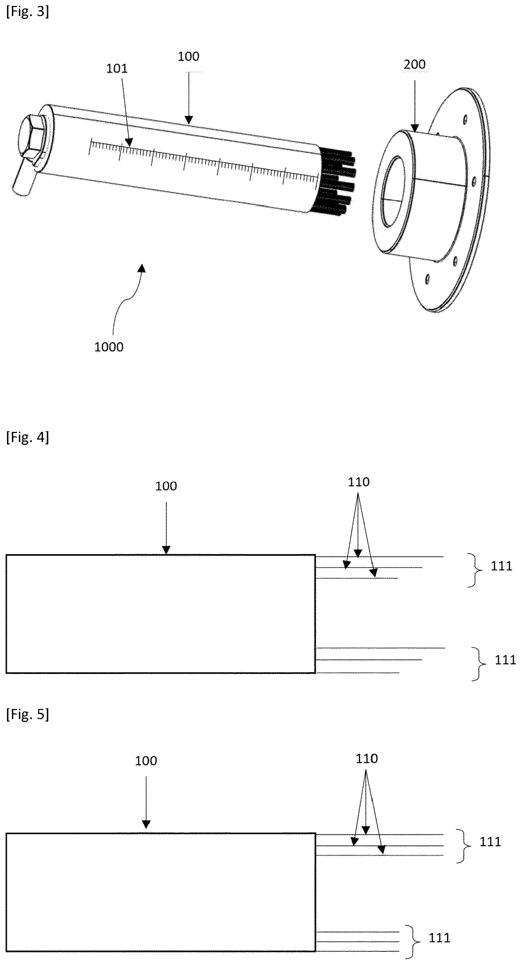

Il comprend également un corps secondaire 200, qui comprend un moyeu 210 et une platine de fixation 230, solidaire du moyeu 210. La forme du moyeu 210 épouse localement celle du corps principal 100, comme illustré sur la figure 3. Le corps principal 100 peut être mobile en translation dans le moyeu 210, donc mobile en translation par rapport au corps secondaire 200.

La platine de fixation 230 permet fixer le corps secondaire 200 de manière amovible sur un capot de ventilation 330 d'une machine tournante électrique 300, en l'espèce grâce à un ensemble d'évidements 231 qui permettent le passage de vis de fixation, de rivets ou d'autres moyens de fixation (boulonnage etc).

Selon l'invention, on prévoit également des moyens de blocage pour bloquer le mouvement de translation du corps principal 100 par rapport au corps secondaire 200 et assurer une solidarisation temporaire du corps principal 100 et du corps secondaire 200.

**Dans un premier mode de réalisation,** illustré sur la figure 1 et la figure 2, les moyens de blocage comprennent un trou traversant 220 taraudé radialement dans le moyeu 210 du corps secondaire 200.

On prévoit dans ce cas une vis insérable dans le trou taraudé 220. La longueur de la vis est choisie pour pouvoir venir en butée contre le corps principal 100 lorsque le corps principal 100 est inséré dans le moyeu 210 du corps secondaire 200, de sorte à bloquer la translation du corps principal 100 dans le moyeu 210 du corps secondaire 200, voir figure 1.

Lorsque la vis insérable dans le trou taraudé 220 est insérée et en butée contre le corps principal 100, celle-ci bloque le mouvement de translation du corps principal 100.

Lorsque la vis insérable dans le trou taraudé 220 n'est pas en butée contre le corps principal 100, la position en translation du corps principal 100 peut être modifiée à loisir.

On peut ainsi ajuster la position de l'extrémité des fibres conductrices (110) par rapport à la machine tournante électrique (300), donc de permettre la mise à la terre des courants de fuite.

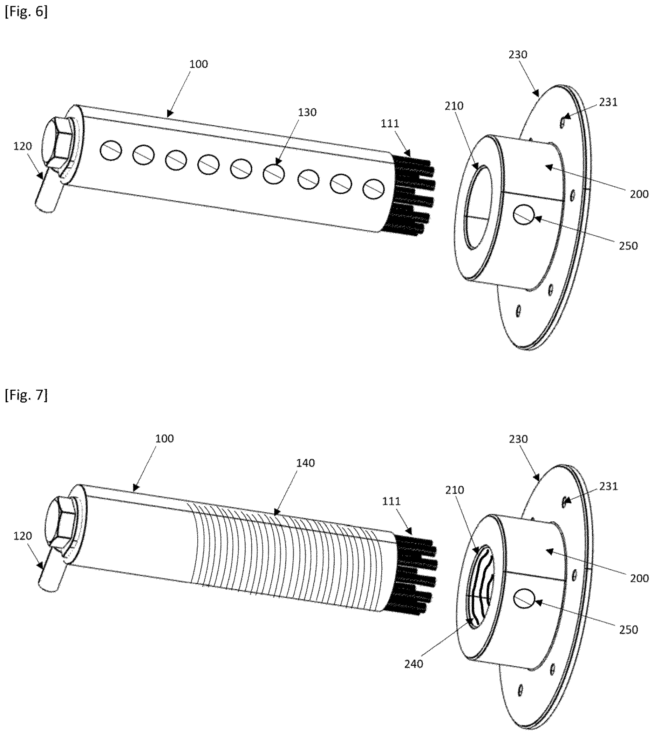

**Dans un deuxième mode de réalisation,** illustré sur la figure 6, les moyens de blocage comprennent un ensemble d'au moins un trou 130 traversant radialement dans le corps principal 100, et disposés axialement.

On prévoit également un ensemble d'au moins un trou traversant 250, solidaire du corps secondaire 200 et disposé radialement dans celui-ci.

De préférence, le diamètre des trous 130 traversant et du trou traversant 250 sont égaux.

On prévoit également une goupille, ou pion, configurée pour pouvoir être insérée de manière amovible dans ledit ensemble d'au moins un trou 130 traversant du corps principal 100 et l'ensemble d'au moins un trou 250 traversant solidaire du corps secondaire 200, ce qui bloque en translation le corps principal 100 par rapport au corps secondaire 200.

Quand le corps principal 100 comprend une pluralité de trous 130 traversant, le choix d'un trou 130 traversant particulier permet d'ajuster la position de l'extrémité des fibres conductrices 110 par rapport à la machine tournante électrique 300, donc de permettre la mise à la terre des courants de fuite.

On peut prévoir une pluralité de trous traversant 250, disposés radialement, afin d'augmenter la flexibilité d'usage par le nombre de positions angulaires que peut prendre le corps principal 100 par rapport au corps secondaire 200.

**Dans un troisième mode de réalisation,** illustré sur la figure 7, les moyens de blocage comprennent un filetage 140 disposé sur une face externe du corps principal 100 qui présente une section ronde.

Dans ce cas, le moyeu 210 du corps secondaire 200 présente un taraudage complémentaire du filetage 140 du corps principal 100.

Le corps principal 100 peut ainsi être vissé dans le moyeu 210 du corps secondaire 200, ce qui permet d'effectuer un mouvement de translation et ainsi d'ajuster la position de l'extrémité des fibres conductrices 110 par rapport à la machine tournante électrique 300, donc de permettre la mise à la terre des courants de fuite.

**Dans un quatrième mode de réalisation,** les moyens de blocage comprennent des raccords à serrage rapide, en particulier des raccords dits « bi-cône » ou « olive », comprenant un corps mâle fileté et un écrou femelle correspondant. On peut aussi prévoir des raccords à griffe. Ce type de raccords est connu par exemple dans le domaine du jardinage ou de la plomberie sous l'appellation de « raccord rapide ».

Lorsque les raccords sont « fermés », le mouvement de translation du corps principal 100 est bloqué.

Lorsque les raccords sont « ouverts », la position en translation du corps principal 100 peut être modifiée à loisir.

On peut ainsi ajuster la position de l'extrémité des fibres conductrices (110) par rapport à la machine tournante électrique (300), donc de permettre la mise à la terre des courants de fuite.

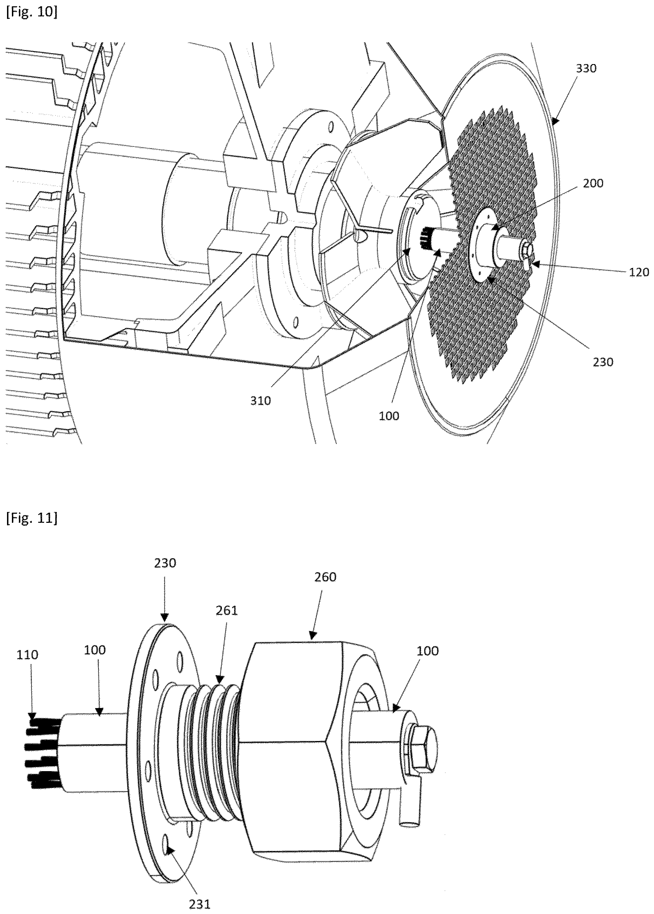

Sur la figure 11, le corps secondaire 200 présente un filetage 261. Lorsque le corps principal 100 est inséré dans le corps secondaire 200, un écrou 260, qui comprend un raccord « bi-cône » et dont le taraudage correspond au filetage 261 du corps secondaire 200 permet de solidariser temporairement le corps principal 100 et le corps secondaire 200.

Avantageusement, quel que soit le mode de réalisation des moyens de blocage, ceux-ci sont réversibles, de sorte à permettre la désolidarisation du corps principal 100 et du corps secondaire 200.

Ainsi, le mouvement de translation du corps principal 100 par rapport au corps secondaire 200 est bloqué temporairement et la solidarisation du corps principal 100 et du corps secondaire 200 est temporaire.

On peut ainsi par exemple repositionner un corps principal et le rapprocher de la machine tournante électrique 300pour compenser le raccourcissement de la longueur des fibres conductrices, qui diminue du fait de leur usure au contact de celle-ci.

On peut aussi remplacer un corps principal usagé, dont les fibres conductrices sont usées, par un corps principal neuf dont les fibres conductrices sont neuves.

De préférence, le corps principal 100 présente une section à symétrie radiale, par exemple ronde ou polygonale régulière.

On peut toutefois prévoir d'autres formes, par exemple une section ovale, pour autant que la forme du moyeu 210 épouse celle du corps principal 100. Une telle forme non régulière permet par exemple de servir de détrompeur pour imposer certaines positions relatives du corps principal 100 et du corps secondaire 200.

Sur une extrémité du corps principal 100, les fibres conductrices 110 sont par exemple regroupées en une pluralité de faisceaux 111 de fibres conductrices. Par exemple sur la figure 2, le corps principal 100 comprend des faisceaux 111 de fibres conductrices disposés à la périphérie de l'extrémité du corps principal 100, de manière circulaire. Dans cet exemple, les fibres conductrices 110 présentent toutes la même longueur.

Alternativement, on peut prévoir que la longueur des fibres conductrices 110 au sein d'un faisceau 111 est différente, comme illustré sur la figure 4.

On peut aussi prévoir qu'au sein d'un faisceau 111, les fibres conductrices 110 ont la même longueur mais que cette longueur diffère d'un faisceau 111 à l'autre, comme illustré sur la figure 5.

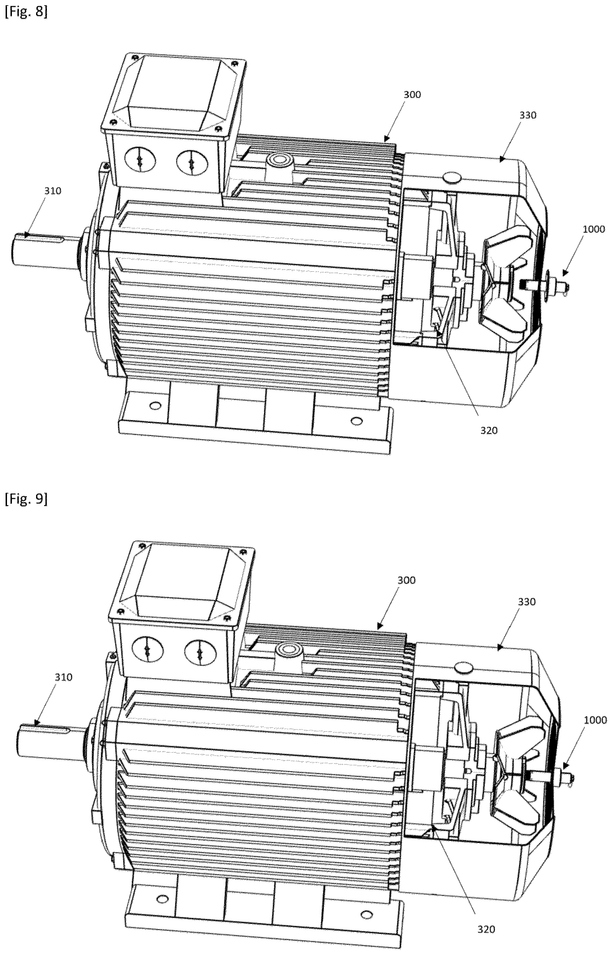

Quel que soit le mode de réalisation précédemment décrit, on peut prévoir que le corps principal 100 comprend un ensemble de graduations 101 inscrites sur celui-ci, comme illustré sur la figure 3, ce qui permet de régler la position du corps principal 100 par rapport au corps secondaire 200, notamment en cas d'usure des fibres conductrices 110.Quel que soit le mode de réalisation précédemment décrit, le dispositif de mise à la terre 1000 est fixé sur le capot de ventilation 330 d'une machine tournante électrique 300 par sa platine de fixation 230, comme illustré sur la figure 8 et la figure 9.

Sur la figure 10, le dispositif de mise à la terre 1000 est fixé sur le capot de ventilation 330 d'une machine tournante électrique 300 par la platine de fixation 230 du corps secondaire 200. Les fibres conductrices 110 sont au contact de l'arbre tournant 310. Les courants de palier induits qui parcourent l'arbre tournant 310 peuvent ainsi être mis à la terre en transitant le long des fibres conductrices 110, du corps principal 100 et de la cosse 120 de mise à la terre.

Lorsque les fibres conductrices 110 sont usées, la platine de fixation 230 du corps secondaire 200 peut rester fixée sur le capot de ventilation 330. Il suffit soit de régler la position relative du corps principal 100 et du corps secondaire 200, de sorte que les fibres conductrices 110 soient de nouveau au contact de l'arbre tournant 310 ; soit de remplacer le corps principal 100 usagé par un corps principal 100 neuf, ce qui est très rapide.

### Nomenclature

1000 Dispositif de mise à la terre
100 corps principal
101 graduations
110 fibres conductrices
111 faisceau de fibres conductrices
120 cosse de mise à la terre
130 trou traversant radial dans le corps principal
140 filetage
200 corps secondaire
210 moyeu
220 trou traversant taraudé
230 platine de fixation
231 évidement de la platine 230
240 taraudage du moyeu
250 trou traversant solidaire du corps secondaire
260 écrou
261 filetage du corps secondaire
300 machine tournante électrique
310 arbre tournant
320 rotor
330 capot de ventilation

## Revendications

1. Dispositif (1000) de mise à la terre d'une machine tournante électrique (300), la machine tournante électrique (300) comprenant un arbre tournant (310), un rotor (320) et un capot de ventilation (330),
ledit dispositif de mise à la terre étant configuré pour être monté sur le capot de ventilation (330) de manière amovible, et comprenant :
- un corps principal (100) conducteur d'électricité, présentant une forme allongée, et supportant à une de ses extrémités un ensemble de fibres conductrices (110) agencées pour permettre la mise à la terre des courants de fuite induits relatifs au rotor (320) dans la machine tournante électrique (300), et une cosse (120) de mise à la terre à l'autre de ses extrémités ;
**caractérisé en ce que**
il comprend en outre :
• des moyens de blocage ; et
• un corps secondaire (200), comprenant :
∘ un moyeu (210) dont la forme épouse localement celle du corps principal (100), et
∘ une platine de fixation (230), solidaire du moyeu (210) ;
Et **en ce que**
• le corps principal (100) est mobile en translation par rapport au corps secondaire (200) ;
• la platine de fixation (230) est configurée pour fixer le corps secondaire (200) sur le capot de ventilation (230) ;
• les moyens de blocage sont configurés pour bloquer le mouvement de translation du corps principal (100) par rapport au corps secondaire (200) et assurer une solidarisation temporaire du corps principal (100) et du corps secondaire (200), permettant d'ajuster la position de l'extrémité des fibres conductrices (110) par rapport à la machine tournante électrique (300), donc de permettre la mise à la terre des courants de fuite.

2. Dispositif selon la revendication 1, dans lequel les moyens de blocage comprennent :
• un trou traversant (220) taraudé radialement dans le moyeu (210) du corps secondaire (200), et
• une vis, insérable dans le trou taraudé (220), et configurée pour venir en butée contre le corps principal (100) lorsque le corps principal (100) est inséré dans le moyeu (210) du corps secondaire (200), de sorte à bloquer la translation du corps principal (100) dans le moyeu (210) du corps secondaire (200).

3. Dispositif selon la revendication 1, dans lequel les moyens de blocage comprennent :
• un ensemble d'au moins un trou traversant (130) radial dans le corps principal (100) ;
• un ensemble d'au moins un trou traversant (250) solidaire du corps secondaire (200) ; et
• une goupille, configurée pour pouvoir être insérée de manière amovible dans ledit ensemble d'au moins un trou traversant radial du corps principal (100) et le trou traversant solidaire du corps secondaire (200).

4. Dispositif selon la revendication 1, dans lequel les moyens de blocage comprennent un raccord à serrage rapide, comprenant :
- un filetage (261) sur la partie externe du corps secondaire (200), faisant office de corps mâle ;
- un écrou (260), faisant office de corps femelle, dont le taraudage correspond au filetage (261) du corps secondaire (200) ; et
- un joint entre le filetage du corps secondaire (200) et l'écrou solidaire du corps principal (100).

5. Dispositif selon l'une quelconque des revendications précédentes, dans lequel les moyens de blocage sont réversibles, de sorte à permettre la désolidarisation du corps principal (100) et du corps secondaire (200).

6. Dispositif selon l'une quelconque des revendications précédentes, dans lequel le corps principal (100) présente une section à symétrie radiale.

7. Dispositif selon l'une quelconque des revendications précédentes, dans lequel :
• le corps principal (100) présente une section ronde et une face externe présentant un filetage (140) ;
• le moyeu (210) du corps secondaire (200) présente un taraudage (240), complémentaire du filetage (140) du corps principal (100), tel que le vissage du corps principal (100) dans le moyeu (210) du corps secondaire (200) permet d'effectuer un mouvement de translation

8. Dispositif selon l'une quelconque des revendications précédentes, dans lequel l'ensemble de fibres conductrices (110) du corps principal (100) comprend une pluralité de faisceaux (111) de fibres conductrices (110), la longueur des fibres au sein d'un faisceau (111) ou la longueur des fibres entre deux faisceaux (111) pouvant être différente.

9. Machine tournante électrique (300) comprenant un arbre tournant (310), un rotor (320), un capot de ventilation (330) et un dispositif de mise à la terre selon l'une quelconque des revendications 1 à 7.

10. Kit comprenant un dispositif de mise à la terre selon l'une quelconque des revendications 1 à 7, et un ensemble d'au moins un autre corps principal (100).
